# EUROPÄISCHE PATENTSCHRIFT

(11) **EP 0 845 317 B1**
(45) Veröffentlichungstag und Bekanntmachung des Hinweises auf die Patenterteilung: **10.02.1999**
(21) Anmeldenummer: 96119140.0
(22) Anmeldetag: 29.11.1996
(51) Int. Cl.: B23B 9/08, B23Q 39/04

(54) **Anlage für die spanende Bearbeitung von Profilen**
Device for metal-cutting working of profiles
Installation pour l'usinage des profils par enlèvement de copeaux

(43) Veröffentlichungstag der Anmeldung: 03.06.1998
(73) Patentinhaber: Peddinghaus Anlagen + Maschinen GmbH, 58285 Gevelsberg (DE)
(72) Erfinder: Magnuson, James, Bradley, Illinois 60915 (US)
(74) Vertreter: Albrecht, Rainer Harald, Dr.-Ing.

(56) Entgegenhaltungen:
- DE-A- 4 231 684
- GB-A- 1 083 742

## Beschreibung

Die Erfindung betrifft eine Anlage für die spanende Bearbeitung von Profilen, insbesondere eine Bohranlage, mit
einem Portal, das beidseits eines Transportweges für das zu bearbeitende Profil angeordnete, ortsfeste Vertikalträger sowie einen oberen Querträger aufweist,
einem an dem Querträger verfahrbar angeordneten Werkzeugschlitten mit einer Bearbeitungsvorrichtung für eine spanende Werkstückbearbeitung und
einem Schlitten, der nach Maßgabe der Werkstückbreite parallel zum Querträger verstellbar ist und eine seitliche Führung für das bearbeitende Profil bildet.

Profile umfaßt im Rahmen der Erfindung Flachstähle, Hohlprofile, T-Profile, Winkelprofile und dergleichen. Als Bearbeitungsvorrichtung ist insbesondere ein Bohrwerk oder ein Fräswerk vorgesehen. An das Portal schließen üblicherweise ein Zuführrollengang sowie ein Abführrollengang für den Transport der Profile an.

Nach dem Stand der Technik, von dem die Erfindung ausgeht, ist das Portal Teil eines Maschinenkörpers, der eine untere Konsole aufweist. Der das zu bearbeitende Profil seitlich führende Schlitten ist ausschließlich an der Konsole oder beidendig sowohl an der unteren Konsole als auch am oberen Querträger verschiebbar geführt (DE-A 42 31 684; Firmendruckschrift "SBM 1000 CNC", 9/93, der Firma Trennjaeger GmbH, D-53864 Euskirchen). Im Rahmen der bekannten Maßnahmen liegt das bearbeitende Werkstück im Arbeitsbereich der Bearbeitungsvorrichtung entweder unmittelbar auf der Konsole oder auf Stützrollen auf, die sich über die Breite des Transportweges hinweg erstrecken und an beiden Enden auf der unteren Konsole gelagert sind. Der Freiraum unterhalb des Werkstückes ist klein. Bei der Werkstückbearbeitung anfallende Späne bleiben im Arbeitsbereich der Anlage und können Störungen an Antriebs- und Meßrollen, die für den Vorschub und die Positionierung des zu bearbeitenden Profils vorgesehen sind, verursachen. Um solche Störungen zu vermeiden, ist es bekannt, in dem noch zur Verfügung stehenden niedrigen Freiraum Fördereinrichtungen für den Abtransport anfallender Späne vorzusehen. Dies ist anlagentechnisch aufwendig.

Der Erfindung liegt die Aufgabe zugrunde, eine Anlage der eingangs beschriebenen Art so weiter auszubilden, daß ohne Vergrößerung der Anlagenbauhöhe ein ausreichender Freiraum unterhalb des Werkstückes zur Verfügung steht. Der Freiraum soll so bemessen sein, daß bei der Werkstückbearbeitung anfallende Späne keine Störungen im Arbeitsbereich verursachen und von einer Bedienungsperson auf einfache Weise entfernt werden können.

Zur Lösung dieser Aufgabe lehrt die Erfindung, daß bei einer Anlage der oben genannten Art der Schlitten an dem Querträger aufgehängt ist und an seinem unteren freien Ende ein Werkstückauflager aufweist, auf dem ein Längsrand des zu bearbeitenden Profils aufliegt, und daß an dem gegenüberliegenden Vertikalträger ebenfalls ein das Profil nur randseitig stützendes Werkstückauflager angeordnet ist. Eine untere, die Portalöffnung begrenzende Konsole entfällt. Im Rahmen der Erfindung liegt es, die Vertikalträger unmittelbar auf einer Bodenfläche aufzustellen. Vorzugsweise sind die Vertikalträger auf einer höchstens fußhohen Bodenschwelle befestigt, wobei die von den Vertikalträgern und dem oberen Querträger begrenzte Portalöffnung einen bis zur Bodenschwelle reichenden, für den Durchgang von Bedienungspersonen ausreichend groß bemessenen Freiraum bildet. Bei der Werkstückbearbeitung anfallende Späne fallen auf den Boden und können dort von einer Bedienungsperson von Zeit zu Zeit mit einem Besen entfernt werden. Durch den unterhalb des Werkstückes zur Verfügung stehenden, großen Freiraum können anfallende Späne keine Störungen im Arbeitsbereich der Anlage verursachen. Gleichwohl ist eine ausreichende Abstützung der zu bearbeitenden Profile im Arbeitsbereich der Bearbeitungsvorrichtung gewährleistet. Dadurch ist es möglich, auch am Ende eines Profils Bohrungen, Ausfräsungen und dergleichen anzubringen.

Nach einer bevorzugten Ausführungsform der Erfindung weisen die Werkstückauflager jeweils eine oder mehrere, in Transportrichtung hintereinander angeordnete, um eine horizontale Achse drehbare Rollen auf. Die Rollen sind einseitig an vorstehenden Zapfen gelagert und stützen lediglich einen im Vergleich zur Breite des Werkstückes schmalen Randbereich des zu bearbeitenden Profils. Zweckmäßig weisen die Werkstückauflager für die Seitenführung des Werkstückes Führungswalzen auf, die um eine vertikale Achse drehbar an Seitenflächen des zu bearbeitenden Profils anliegen.

In weiterer Ausgestaltung lehrt die Erfindung, daß an dem Schlitten und/oder an dem den Transportweg seitlich begrenzenden Vertikalträger eine motorisch angetriebene Walze für die Transportbewegung des zu bearbeitenden Profils und/oder eine an eine Meß- und Steuereinrichtung angeschlossene Meßrolle zur Positionsbestimmung des Werkstückes angeordnet ist.

Vorzugsweise ist an den Schlitten eine Bearbeitungsvorrichtung für eine spanende Bearbeitung einer Werkstückseitenfläche, vorzugsweise eine Horizontalbohreinrichtung, angeschlossen. Ferner empfiehlt die Erfindung, daß der Schlitten rückseitig unter Zwischenschaltung mindestens einer hydraulischen Kolben/Zylinderanordnung an dem von dem Transportweg fernliegenden Vertikalträger abgestützt ist. Die Kolben/Zylinderanordnung nimmt Drehmomente auf, die durch eine auf eine Seitenfläche des Profils arbeitende Horizontalbohreinrichtung in den Schlitten eingeleitet werden. Ferner kann die Kolben/Zylinderanordnung als Stelleinrichtung für die Stellbewegung des Schlittens eingesetzt werden.

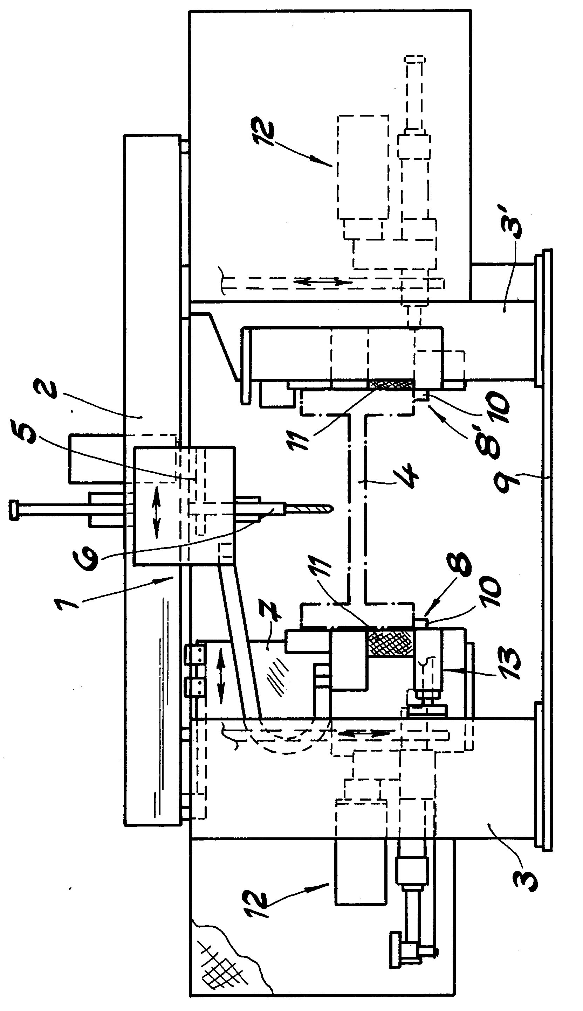

Im folgenden wird die Erfindung anhand einer lediglich ein Ausführungsbeispiel darstellenden Zeichnung ausführlich erläutert. Die einzige Figur zeigt in schematischer Darstellung die Frontansicht einer Bohranlage.

Zum grundsätzlichen Aufbau der in der Figur dargestellten Bohranlage gehören ein Portal 1 mit einem oberen Querträger 2 und ortsfesten Vertikalträgern 3,3', die beidseits eines Transportweges für ein zu bearbeitendes Profil 4 angeordnet sind, ein an dem Querträger 2 verfahrbar angeordneter Werkzeugschlitten 5 mit einem Bohrwerk 6 sowie ein Schlitten 7, der nach Maßgabe der Werkstückbreite parallel zum Querträger 2 verstellbar ist und eine seitliche Führung für das zu bearbeitende Profil 4 bildet. Der Schlitten 7 ist an dem Querträger 2 aufgehängt und weist an seinem unteren freien Ende ein Werkstückauflager 8 auf, auf dem ein Längsrand des zu bearbeitenden Profils 4 aufliegt. Der Figur entnimmt man, daß an dem gegenüberliegenden Vertikalträger 3', jenseits des Transportweges, ebenfalls ein das Profil nur randseitig stützendes Werkstückauflager 8' angeordnet ist.

Die Vertikalträger 3, 3' sind auf einer höchstens fußhohen Bodenschwelle 9 befestigt, wobei die von den Vertikalträgern 3, 3' und dem oberen Querträger 2 begrenzte Portalöffnung einen bis zur Bodenschwelle 9 reichenden, für den Durchgang von Bedienungspersonen ausreichend groß bemessenen Freiraum bildet. Bei der Bohrbearbeitung anfallende Späne können von Zeit zu Zeit von einer Bedienungsperson mit einem Besen von der Bodenschwelle 9 entfernt werden. Sowohl der Bereich unterhalb des Werkstückes 4 als auch der Bereich unterhalb des Schlittens 7 ist für Reinigungsarbeiten gut zugänglich.

Die Werkstückauflager 8, 8' bestehen aus mehreren, in Transportrichtung hintereinander angeordneten, um eine horizontale Achse drehbare Rollen 10. Der Figur entnimmt man, daß die Rollen 10 nur einen im Vergleich zur Werkstückbreite schmalen Längsbereich des Werkstückes 4 stützen und an vorkragenden Wellenzapfen gelagert sind. Ferner weisen die Werkstückauflager 8, 8' Führungswalzen 11 auf, die um eine vertikale Achse drehbar an Seitenflächen des zu bearbeitenden Profils 4 anliegen. Zweckmäßig ist eine der Führungswalzen 11 motorisch antreibbar für die Transportbewegung des zu bearbeitenden Profils 4. Zweckmäßigerweise ist ferner eine im Ausführungsbeispiel nicht dargestellt Meßrolle zur Positionsbestimmung des Werkstückes vorgesehen, die an eine Meß- und Steuereinrichtung angeschlossen ist.

Der Figur entnimmt man, daß an den Schlitten 7 eine auf eine Seitenfläche des Profils 4 arbeitende Horizontalbohreinrichtung 12 angeschlossen ist. Entsprechend ist eine weitere Horizontalbohreinrichtung 12 auf der gegenüberliegenden Seite des Transportweges an den dortigen Vertikalträger 3' angeschlossen. Es versteht sich, daß die Horizontalbohreinrichtungen 12 ebenso wie das am Querträger 2 verfahrbar angeordnete Bohrwerk 6 mehrere, in Werkstücklängsrichtung hintereinander angeordnete Antriebe mit Bohrwerkzeugen aufweisen können.

Bei einer Bohrbearbeitung der Werkstückseitenfläche wird auf den Schlitten 7 ein Dehmoment ausgeübt. Zur Aufnahme dieses Drehmomentes ist der Schlitten 7 rückseitig unter Zwischenschaltung mindestens einer hydraulischen Kolben/Zylinderanordnung 13 an dem von dem Transportweg fernliegenden Vertikalträger 3 abgestützt. Die Kolben/Zylinderanordnung 13 kann auch als Stelleinrichtung für die Stellbewegung des Schlittens 7 eingesetzt werden.

An die in der Figur dargestellte Anlage schließen in üblicher Weise ein Zuführrollengang sowie ein Abführrollengang für den An- und Abtransport der Werkstücke an. Aus Gründen der Übersichtlichkeit sind die Zuführ- und Abführrollengänge nicht dargestellt werden.

## Patentansprüche

1. Anlage für die spanende Bearbeitung von Profilen, insbesondere Bohranlagen, mit
einem Portal (1), das beidseits eines Transportweges für das zu bearbeitende Profil (4) angeordnete, ortsfeste Vertikalträger (3, 3') sowie einen oberen Querträger (2) aufweist,
einem an dem Querträger (2) verfahrbar angeordneten Werkzeugschlitten (5) mit einer Bearbeitungsvorrichtung (6) für eine spanende Werkstückbearbeitung und
einem Schlitten (7), der nach Maßgabe der Werkstückbreite parallel zum Querträger (2) verstellbar ist und eine seitliche Führung für das zu bearbeitende Profil (4) bildet,
**dadurch gekennzeichnet**, daß der Schlitten (7) an dem Querträger (2) aufgehängt ist und an seinem unteren freien Ende ein Werkstückauflager (8) aufweist, auf dem ein Längsrand des zu bearbeitenden Profils (4) aufliegt, und daß an dem gegenüberliegenden Vertikalträger (3') ebenfalls ein das Profil nur randseitig stützendes Werkstückauflager (8') angeordnet ist.

2. Anlage nach Anspruch 1, dadurch gekennzeichnet, daß die Vertikalträger (3, 3') auf einer höchstens fußhohen Bodenschwelle (9) befestigt sind und daß die von den Vertikalträgern (3, 3') und dem oberen Querträger (2) begrenzte Portalöffnung einen bis zur Bodenschwelle (9) reichenden, für den Durchgang von Bedienungspersonen ausreichend groß bemessenen Freiraum bildet.

3. Anlage nach Anspruch 1 oder 2, dadurch gekennzeichnet, daß die Werkstückauflager (8, 8') jeweils eine oder mehrere in Transportrichtung hintereinander angeordnete, um eine horizontale Achse drehbare Rollen (10) aufweisen.

4. Anlage nach einem der Ansprüche 1 bis 3, dadurch gekennzeichnet, daß die Werkstückauflager (8, 8') Führungswalzen (11) aufweisen, die um eine vertikale Achse drehbar an Seitenflanken des zu bearbeitenden Profils (4) anliegen.

5. Anlage nach einem der Ansprüche 1 bis 4, dadurch gekennzeichnet, daß an dem Schlitten und/oder an dem den Transportweg seitlich begrenzenden Vertikalträger (8') eine motorisch angetriebene Walze für die Transportbewegung des zu bearbeitenden Profils (4) und/oder eine an eine Meß- und Steuereinrichtung angeschlossene Meßrolle zur Positionsbestimmung des Werkstückes (4) angeordnet ist.

6. Anlage nach einem der Ansprüche 1 bis 5, dadurch gekennzeichnet, daß an den Schlitten (7) eine Bearbeitungsvorrichtung (12) für eine spanende Bearbeitung einer Werkstückseitenfläche, vorzugsweise eine Horizontalbohreinrichtung, angeschlossen ist.

7. Anlage nach einem der Ansprüche 1 bis 6, dadurch gekennzeichnet, daß der Schlitten (7) rückseitig unter Zwischenschaltung mindestens einer hydraulischen Kolben/Zylinderanordnung (13) an dem von dem Transportweg fernliegenden Vertikalträger (3) abgestützt ist.

## Claims

1. An installation for machining profiles, more particularly boring installations, comprising:
a portal (1) which comprises fixed vertical members (3, 3') disposed on either side of a transport path for the profile (4) for machining, and a top cross-member (2),
a tool slide (5) disposed to be movable on the cross-member (2) and having a machining device (6) for workpiece machining and
a slide (7) which is adjustable parallel to the cross-member (2) in accordance with the workpiece width and which forms a lateral guide for the profile (4) for machining,
**characterised in that** the slide (7) is suspended from the cross-member (2) and at its bottom free end has a workpiece support (8), on which a longitudinal edge of the profile (4) for machining rests, and in that a workpiece support (8'), which also supports the profile only at the edge, is disposed on the opposite vertical member (3').

2. An installation according to claim 1, characterised in that the vertical members (3, 3') are fixed on a floor sill (9) no higher than foot-height and in that the portal opening defined by the vertical members (3, 3') and the top cross-member (2) forms a free space extending as far as the floor sill (9) and of sufficiently large dimensions for operators to pass through.

3. An installation according to claim 1 or 2, characterised in that the workpiece supports (8, 8') each comprise one or more rollers (10) disposed consecutively in the direction of transport and rotatable about a horizontal axis.

4. An installation according to any one of claims 1 to 3, characterised in that the workpiece supports (8, 8') have guide drums (11) which bear rotatably about a vertical axis against side flanks of the profile (4) for machining.

5. An installation according to any one of claims 1 to 4, characterised in that a motor-driven drum for the transport movement of the profile (4) for machining and/or a measuring roller connected to a measuring and control device for determining the position of the workpiece (4) is/are disposed on the slide and/or on the vertical member (8') laterally defining the transport path.

6. An installation according to any one of claims 1 to 5, characterised in that a machining device (12) for machining a workpiece side surface, preferably a horizontal borer, is connected to the slide (7).

7. An installation according to any one of claims 1 to 6, characterised in that the slide (7) is supported rearwardly, with the interposition of at least one hydraulic piston and cylinder unit (13), on the vertical member (3) remote from the transport path.

## Revendications

1. Installation pour usiner des profilés par enlèvement, en particulier installations de perçage, comprenant un portique (1) qui comporte des montants verticaux fixes (3, 3'), disposés de part et d'autre du trajet d'acheminement du profilé à usiner (4), ainsi qu'une traverse supérieure (2), un chariot porte-outil (5) monté avec une possibilité de déplacement sur la traverse (2) et muni d'un dispositif d'usinage (6) pour un usinage de pièce par enlèvement, et un chariot (7) qui peut être déplacé parallèlement à la traverse (2) en fonction de la largeur de la pièce et qui forme un moyen de guidage latéral pour le profilé à usiner (4), caractérisée en ce que le chariot (7) est accroché à la traverse (2) et comporte, à son extrémité inférieure libre, un moyen d'appui de pièce (8) sur lequel prend appui un bord longitudinal du profilé à usiner (4), et en ce que sur le montant vertical opposé (3') est également disposé un moyen d'appui de pièce (8') qui ne supporte le profilé qu'au niveau de son bord.

2. Installation selon la revendication 1, caractérisée en ce que les montants verticaux (3, 3') sont fixés à un socle (9) de la hauteur maximale d'une marche, et en ce que l'ouverture du portique délimitée par les montants verticaux (3, 3') et par la traverse supérieure (2) forme un espace libre qui s'étend jusqu'au socle (9) et dont les dimensions sont suffisantes pour livrer passage au personnel de service.

3. Installation selon la revendication 1 ou 2, caractérisée en ce que les moyens d'appui de pièce (8, 8') comportent chacun un ou plusieurs galets (10) qui sont disposés les uns derrière les autres dans le sens d'acheminement et qui peuvent tourner autour d'un axe horizontal.

4. Installation selon l'une des revendications 1 à 3, caractérisée en ce que les moyens d'appui de pièce (8, 8') comportent des rouleaux de guidage (11) qui sont appliqués, avec une possibilité de rotation autour d'un axe vertical, contre les flancs latéraux du profilé à usiner (4).

5. Installation selon l'une des revendications 1 à 4, caractérisée en ce que, sur le chariot et/ou sur le montant vertical (8') délimitant latéralement le trajet d'acheminement, est disposé un rouleau à entraînement motorisé pour acheminer le profilé à usiner (4) et/ou un galet de mesure relié à un dispositif de mesure et de commande pour déterminer la position de la pièce (4).

6. Installation selon l'une des revendications 1 à 5, caractérisée en ce qu'un dispositif d'usinage (12) prévu pour usiner par enlèvement une face latérale de pièce, de préférence un dispositif de perçage horizontal, est relié au chariot (7).

7. Installation selon l'une des revendications 1 à 6, caractérisée en ce que, sur son côté arrière, le chariot (7) prend appui, par l'intermédiaire d'au moins un agencement hydraulique piston-cylindre (13), sur le montant vertical (3) distant du trajet d'acheminement.
